# EUROPÄISCHE PATENTSCHRIFT

(11) **EP 1 140 586 B1**
(45) Veröffentlichungstag und Bekanntmachung des Hinweises auf die Patenterteilung: **15.03.2006**
(21) Anmeldenummer: 00978954.6
(22) Anmeldetag: 28.09.2000
(51) Int. Cl.: B60S 1/38, B65D 85/00, B65D 75/00

(54) **VERPACKUNGSEINHEIT FÜR EIN IN DIESER ZUMINDEST BEREICHSWEISE UNTERGEBRACHTES WISCHBLATT FÜR SCHEIBEN VON KRAFTFAHRZEUGEN**
PACKAGING UNIT FOR A VEHICLE WINDSCREEN WIPER BLADE WHICH IS AT LEAST PARTLY LOCATED THEREIN
EMBALLAGE UNITAIRE POUR BALAI D'ESSUIE-GLACE POUR VITRES D'AUTOMOBILES, PLACE AU MOINS EN PARTIE DANS LEDIT EMBALLAGE

(30) Priorität: 28.10.1999 DE 19951971
(43) Veröffentlichungstag der Anmeldung: 10.10.2001
(73) Patentinhaber: ROBERT BOSCH GMBH, 70442 Stuttgart (DE)
(72) Erfinder: KOTLARSKI, Thomas, 53474 Bad Neuenahr (DE)
(86) Internationale Anmeldenummer: PCT/DE2000/003388
(87) Internationale Veröffentlichungsnummer: WO 2001/030619

(56) Entgegenhaltungen:
- DE-A- 2 326 093
- US-A- 2 026 626
- US-A- 4 239 104

## Beschreibung

### Stand der Technik

Die für das Ersatzteilgeschäft auf den Markt gelangenden Wischblätter müssen aus mehreren Gründen verpackt sein. In erster Linie geht es dabei um den Schutz der empfindlichen, an den Wischlippen der gummielastischen Wischblattleisten befindlichen Wischkanten, welche die Feinarbeit beim Wischen von Kraftfahrzeugscheiben ausführen müssen. Herkömmliche Wischblätter, bei denen die Wischblattleiste von einem Tragbügelgestell gehalten ist (DE-A-15 05 397) sind lose in Verpackungseinheiten untergebracht, die als Blisterpackungen bezeichnet werden. Durch die lose und somit spannungsfreie Umhüllung des gestreckten Wischblatts ist ein zufriedenstellender Schutz und eine gute Präsentation derartiger Wischblätter gegeben. Auch kann die Große einer solchen Verpackungseinheit der Größe des Wischblatts so angepasst werden, dass deren Raumbedarf möglichst klein gehalten werden kann.

Eine gattungsgemäße Verpackungseinheit wurde mit der DE-A-23 26 093 bekannt.

Wischblätter mit einem langgesatreckten, federelastischen Tragelement für die Wischleiste (DE 196 41 042 A1 bzw.

DE 197 29 864 Al) müssen in unbelastetem Zustand - also so wie sie in den Handel gelangen - derart gekrümmt sein, daß während des Wischbetriebs eine ordnungsgemäße Anlage der Wischlippe über die gesamte Länge des Wischblatts auch an sphärisch gekrümmten Kraftfahrzeugen sichergestellt ist. Dieser Vorkrümmung des Wischblatts bedingt einen erheblichen Raumbedarf, wenn es lose in einer bekannten Verpackungseinheit untergebracht werden soll. Eine Streckung des Wischblatts in einer schmalen Verpackungseinheit würde dazu führen, daß die Wischlippe durch das nun gespannte Tragelement mit ihren Wischkanten dauerhaft an eine Innenwand der Verpackungseinheit angedrückt wäre. Dies hätte eine Verformung der Wischlippe und damit die Unbrauchbarkeit des Wischblatts zur Folge.

### Vorteile der Erfindung

Die gestreckte, rinnenartige Verpackungseinhei nach Anspruch 1 umgibt die Wischlippe über deren gesamte Länge mit Abstand. Die an den Rinnen-Längskanten angeordneten Abstützungen liegen dabei an den Stützen des Wischblatts an, so daß dieses beim Einbringen in die Verpackungseinheit entsprechend der Streckung der Verpackungseinheit aus seiner unbelasteten, gekrümmten Form raumsparend gestreckt und durch deren Steifheit in dieser Strecklage fixiert wird, ohne daß dadurch die Wischlippe belastet wird. Die Anordnung der Wischblatt-Stützen beidseitig der Längs-Symetrieebene - welche quer zu den Bandflächen des Tragelements ausgerichtet ist - verhindert eine Krümmung des verpackten Wischblatts in Richtung der Tragelement-Bandflächen. Die Streckung des Wischblatts hat keine nachteiligen Folgen für dessen spätere Benutzung, weil diese nicht größer ist als die während des Wischbetriebs durch die Formgebung der zu wischenden Scheibe bedingten Streckung.

Bei bestimmten Anwendungsfällen kann es gemäß einer ersten Ausführungsform der Erfindung von Vorteil sein, wenn das Tragelement zumindest abschnittsweise mit zumindest zwei bezüglich der Ebene - die in den meisten Fällen eine Symmetrieebene ist - einander gegenüberliegend angeordneten seitlichen Randabschnitten über die Wischleiste hinausragt, an denen die Stützen des Wischblatts ausgebildet sind und wenn weiter an jeder der Rinnen-Längskanten der Verpackungseinheit den Stützen des Wischblatts zugeordnete, im Querschnitt U-förmig ausgebildete Ansätze angeordnet sind, deren jeweiligen U-Schenkel die Randabschnitte des Tragelements umgreifend sich zur Symmetrieebene erstrecken. Dabei bilden die einander zugewandten Seiten der U-Schenkel die Abstützungen, welche mit den voneinander abgewandten, als Stützen nutzbaren Bandflächen des Tragelements zusammenwirken. Die U-förmigen, geradlinig gestreckten Ansätze der Verpackungseinheit zwingen das Wischblatt zur Streckung, wenn dieses in Längsrichtung in die Verpackungseinheit eingebracht wird.

Ein anderer Anwendungsfall - beispielsweise wenn das Tragelement seitlich nicht über die Wischleiste ragt - sieht vor, daß die Wischleiste des Wischblatts an ihren beiden einander gegenüberliegenden Längsseiten mit jeweils einer zu ihrer Längsseite randoffenen Längsnut versehen ist, an deren Seitenflächen die wischblattseitigen Stützen ausgebildet sind und daß weiter an jeder der Rinnen-Längskanten jeweils ein krallenartiger Ansatz angeordnet ist, der sich zur Symetrieebene in die eine, ihm zugeordnete Längsnut erstreckt. Dabei bilden die beiden krallenartigen Ansätze der Verpackungseinheit deren Abstützungen, die mit einander zugewandten, die Abstützungen bildenden Nutwänden der Wischleiste zusammenarbeiten, wenn die Verpackungseinheit auf die Wischleiste des Wischblatts aufgeschoben wird und dabei gestreckt wird.

Eine besonders einfache, kostengünstige Ausführung der Erfindung ergibt sich, wenn die Wischleiste eine mit dem Tragelement verbundene Kopfleiste hat, die über einen zwischen den beiden Längsnuten verbleibenden Steg mit der leistenartigen Wischlippe verbunden ist, wobei an den Seitenwänden der beiden Längsnuten die Stützen des Wischblatts ausgebildet sind. Die Ausbildung des Stegs durch die Anordnung der beiden Längsnuten ist gängige Praxis, so daß diese für die Verpackungseinheit nutzbar sind.

Ungeachtet dessen kann es zum Beispiel aus Gründen der Stabilität zweckmäßig sein, wenn die wischblattseitigen Stützen an in der Kopfleiste angeordneten Längsnuten ausgebildet sind.

Eine Weiterbildung der Erfindung sieht vor, daß die Verpackungseinheit zwei miteinander verbundene, rinnenartige Bauteile aufweist, deren jeweilige Abstützungen bezüglich einer durch die Verpackungseinheit gelegten Ebene in entgegengesetzte Richtungen weisen. Dadurch wird erreicht, daß sich die von den beiden in der Verpackungseinheit befindlichen, gestreckten Wischblätter auf die Verpackungseinheit ausgeübten Kräfte aufheben, weil diese einander entgegen gerichtet sind. Die Dimensionierung der Wände der Verpackungseinheit kann somit reduziert werden.

Je nach dem an die so gebildete Doppel-Verpackungseinheit gestellte Forderungen hinsichtlich deren Abmessungen bietet es sich an, die beiden Bauteile entweder entlang ihren Rinnen-Basen miteinander zu verbinden oder aber auch die Verpackungseinheit so auszubilden, daß ihre beiden Bauteile zumindest über einen Teilabschnitt einen gemeinsamen Rinnenwange aufweisen.

Eine einfache Herstellung der Verpackungseinheit - beispielsweise mittels Endlosextrusion -und eine einfache Handhabung beim Einbringen der Wischblätter in die Verpackungseinheit ergibt sich, wenn das rinnenartige Bauteil an seinen beiden Enden offen ist.

Wenn das Wischblatt an der von der Wischlippe abgewandten Bandfläche des Tragelements mit einer sich in Längsrichtung des Wischblatts erstreckenden Windabweisleiste versehen ist, ist ein Schutz dieser Windabweisleiste gegeben, wenn die Verpackungseinheit an ihrer von der Rinnen-Basis abgewandten Seite eine die Windabweisleiste übergreifende Haube aufweist.

Eine kostengünstige Herstellung der Verpackungseinheit ergibt sich, wenn diese aus einem Kunststoff gefertigt ist.

Wie die erfindungsgemäße Verpackungseinheit aufgebaut sein kann, ist auch dem Anspruch 12 entnehmbar. Dadurch erkennt man, daß die Streckhilfe lediglich die Streckfunktion, also die Dreipunktauflage bereitstellen muß, während für den Schutz das zusätzliche Behältnis zuständig ist.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

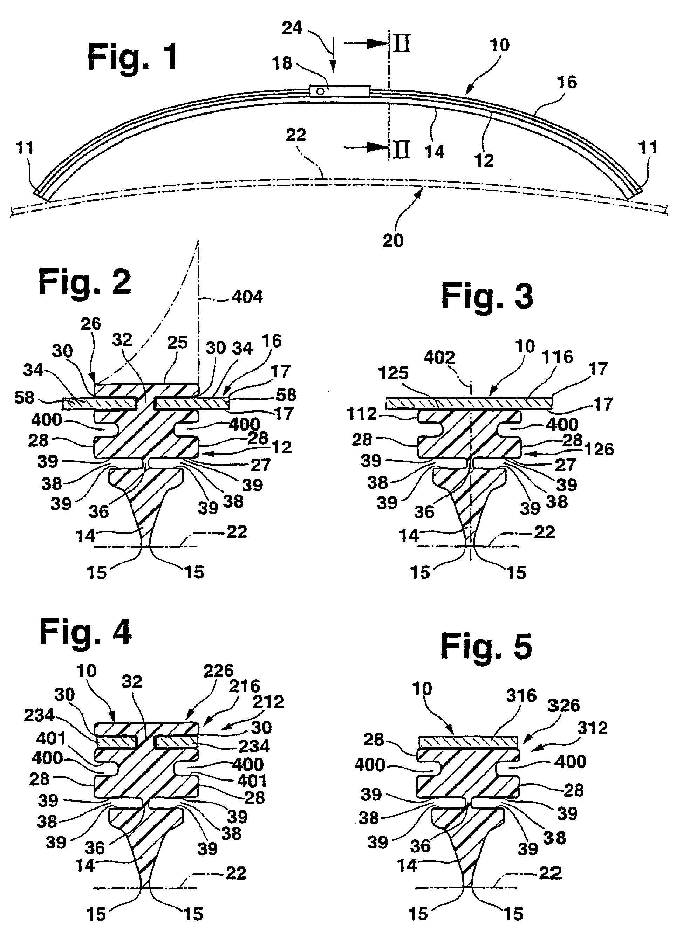

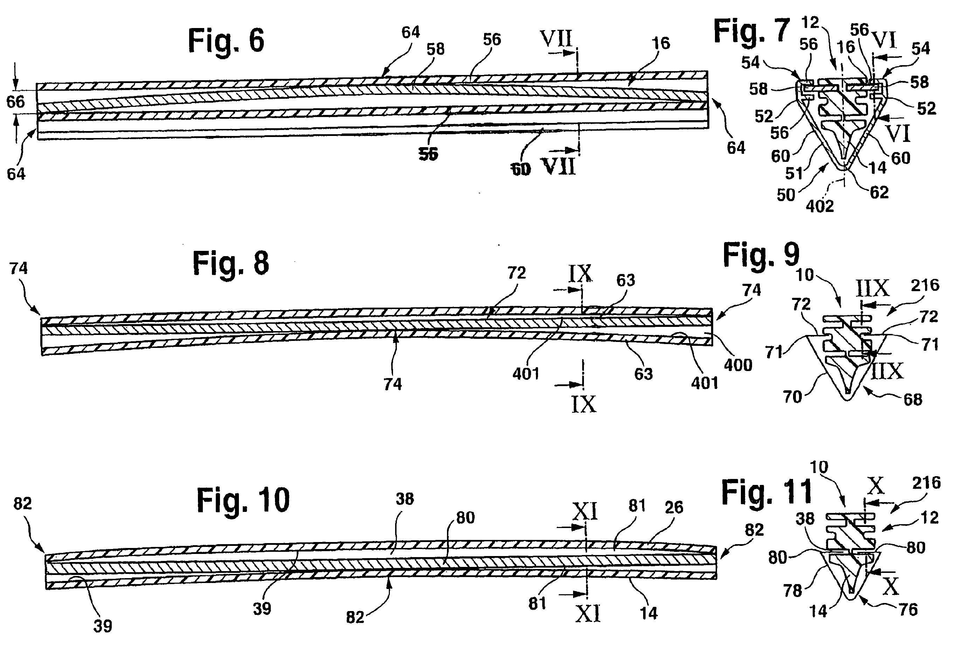

In der Zeichnung zeigen: Figur 1 eine Seitenansicht eines zu verpackenden Wischblatts, Figur 2 die Querschnittsfläche eines Schnitts entlang der Linie II-II durch eine erste Ausführungsform des Wischblatts gemäß Figur 1, Figur 3 die Querschnittsfläche gemäß Figur 2 durch eine andere Ausführungsform des Wischblatts, Figur 4 die Querschnittsfläche gemäß Figur 2 durch eine weitere Ausführungsform des Wischblatts, Figur 5 die Querschnittsfläche gemäß Figur 2 durch eine weitere Ausführungsform des Wischblatts, Figur 6 einen Teillängsschnitt entlang der Linie VI-VI durch eine erste

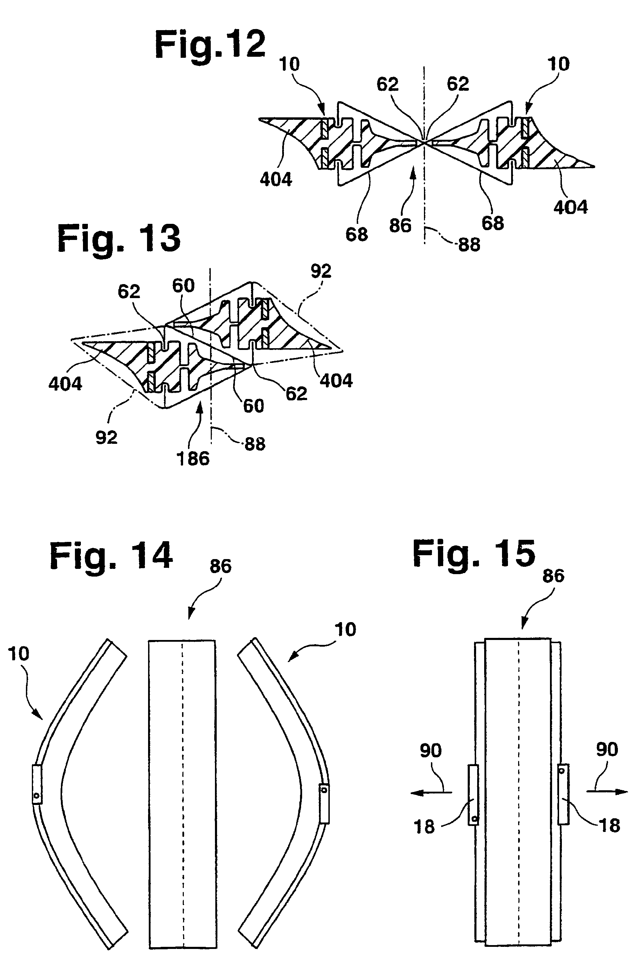

Ausführungsform der Verpackungseinheit gemäß Figur 7 in der ein Wischblatt untergebracht ist, Figur 7 die Querschnittsfläche durch das Wischblatt und die Verpackungseinheit gemäß Figur 6, Figur 8 einen Teillängsschnitt entlang der Linie VIII-VIII durch eine andere Ausführungsform der Verpackungseinheit gemäß Figur 9, in der ein Wischblatt untergebracht ist, Figur 9 die Querschnittsfläche durch das Wischblatt und die Verpackungseinheit gemäß gemäß Figur 8, Figur 10 einen Teillängsschnitt entlang der Linie X-X durch eine weitere Ausführungsform der Verpackungseinheit gemäß Figur 11 in der ein Wischblatt untergebracht ist, Figur 11 die Querschnittsfläche durch das Wischblatt und die Verpackungseinheit gemäß Figur 10, Figur 12 die Querschnittsfläche entsprechend Figur 9 durch eine erste Ausführungsform einer zwei Wischblätter aufnehmenden Verpackungseinheit, wobei die beiden Wischblätter jeweils mit einer Windabweisleiste versehen sind, Figur 13 die Querschnittsfläche gemäß Figur 12 durch eine andere Ausführungsform einer zwei jeweils mit einer Windabweisleiste ausgestatteten Wischblätter aufnehmenden verpackungseinheit, Figur 14 eine unmaßstäbliche Seitenansicht der Verpackungseinheit gemäß Figur 12 sowie der beiden in dieser unterzubringenden Wischblätter und Figur 15 eine Seitenansicht der Verpackungseinheit gemäß Figur 14 wobei die beiden Wischblätter in der Verpackungseinheit untergebracht sind.

### Beschreibung der Ausführungsbeispiele

In Figur 1 in Seitenansicht dargestelltes Wischblatt 10 hat eine langgestreckte, gummielastische Wischleiste 12, die mit einer Wischlippe 14 an der zu wischenden Oberfläche 22 einer Kraftfahrzeugscheibe 20 anlegbar ist. Die Wischleiste 12 wird längsachsenparallel von einem langgestreckten, federelastischen Tragelement 16 gehalten und bildet mit diesem zusammen das Wischblatt 10. Zu dem Wischblatt 10 gehört noch eine Anschlußvorrichtung 18, über welche dieses mit einem angetriebenen, nicht dargestellten Wischerarm verbunden werden kann. Weiter zeigt Figur 1 den Querschnitt durch die Kraftfahrzeugscheibe 20 in strichpunktierter Darstellung, deren zu wischende Oberfläche 22 der leistenartigen Wischlippe 14 des Wischblatts zugewandt ist. Das Wischblatt 10 ist in einer Position gezeichnet, in der es vollständig unbelastet nur mit seinen beiden Enden 11 an der Oberfläche 22 der Scheibe 20 anliegt. Dabei zeigt sich, daß das Wischblatt 10 eine stärkere Krümmung als die Scheibe 20 aufweist. Diese Krümmung des Wischblatts rührt von einer entsprechenden Krümmung des Tragelements 16 her, welches über seine Bandflächen 17 gekrümmt ist. Bezüglich der so bewirkten Krümmung der Wischlippe 14 ist das Tragelement außenliegend angeordnet. Wenn das Wischblatt 10 während des Wischbetriebs durch den Wischerarm in Richtung eines Pfeiles 24 mit seiner Wischlippe 14 über seine gesamte Länge an der Scheibe angelegt ist, sorgt das nun gegen die Scheibe 20, 22 gespannte Tragelement 16 für eine ordnungsgemäße Verteilung der Anlegekraft (Pfeil 24).

Die Figuren 2 bis 5 zeigen Querschnitte durch verschiedene Ausführungsformen des Wischblatts gemäß Figur 1 in vergrößerter Darstellung. Bei einer ersten Ausführungsform gemäß Figur 2 weist die Wischleiste 12 eine Kopfleiste 26 auf, die mit zwei einander gegenüberliegenden, zu ihren Seitenflächen 28 offenen Längsnuten 30 versehen ist, wobei zwischen den beiden Nuten 30 eine Wand 32 verbleibt. Die Längsnuten 30 dienen zur Aufnahme von jeweils einer langgestreckten, elastischen Federschiene 34, die beide zum Tragelement 16 gehören. An die Kopfleiste 26 schließt sich die langgestreckte Wischlippe 14 an, welche über einen sogenannten Kippsteg 36 mit der Unterseite 27 der Kopfleiste 26 verbunden ist.

Die Ausführungsform des Wischblatts 10 gemäß Figur 3 unterscheidet sich von dem anhand der Figur 2 beschriebenen Wischblatt dadurch, daß an der von der Wischlippe 14 der Wischleiste 112 abgewandten Oberseite 125 der Kopfleiste 126 ein einstückiges, bandartig langgestrecktes, federelastisches Tragelement 116 angebracht ist. Das Tragelement 116 entspricht in seiner gekrümmten Formgebung und hinsichtlich seiner Aufgaben vollständig dem Tragelement 16 gemäß den Figuren 1 und 2. Die Verbindung zwischen der Wischleiste 112 beziehungsweise der Kopfleiste 126 und dem Tragelement 116 kann beispielsweise durch eine Klebeverbindung erfolgen.

Die in Figur 4 dargestellte Querschnittsform des Wischblatts 10 entspricht vollständig der Querschnittsform gemäß Figur 2 mit Ausnahme der Breite der beiden das Tragelement 216 bildenden Federschienen 234. Dort sind diese in ihrer Breite auf die Tiefe ihrer Aufnahme-Längsnuten 30 in der Kopfleiste 226 abgestimmt. Es ist jedoch auch denkbar, daß die Breite des Tragelements 16 (Fig. 2) sich von einem breiten Mittelabschnitt aus - an welchem die Anschlußvorrichtung 18 angeordnet ist - zu den beiden Enden 11 des Wischblatts 10 hin verjüngt, so daß sich im Mittelbereich des Wischblatts ein Querschnitt gemäß Figur 2 ergibt, während die beiden Endabschnitte 11 des Wischblatts einen Querschnitt gemäß Figur 4 aufweisen.

Der Querschnitt des in Figur 5 dargestellten Wischblatts 10 entspricht dem Querschnitt des in Figur 3 dargestellten Wischblatts mit Ausnahme der Breite des Tragelements 316. Hier entspricht die Tragelementbreite der Breite der Kopfleiste 326. Die Verbindung zwischen der Wischleiste 312 und dem Tragelement 316 kann wie bei der Ausführungsform gemäß Figur 3 ebenfalls durch eine Klebeverbindung erreicht werden. Auch für die beiden Ausführungsformen gemäß den Figuren 3 und 5 gilt, daß eine Verjüngung des Tragelements 116 von einem Mittelabschnitt des Wischblatts aus mit einer Breite gemäß Figur 3 sich zu den beiden Enden 11 des Wischblatts hin so verjüngt, daß dort der jeweilige Querschnitt des Wischblatts beziehungsweise des Tragelements 316 der Querschnittsform gemäß Figur 5 entspricht.

Bei allen 4 beschriebenen Ausführungsformen (Fig. 2 bis 5) des Wischblatts können darüber hinaus noch in der Kopfleiste 26 bzw. 126 bzw. 226 bzw. 326 einander gegenüberliegende, zu den Seitenflächen 28 der Kopfleisten hin offene Längsnuten 400 angeordnet sein, welche beispielsweise zur besseren Anpassung des Wischblatts an die Form der Scheibenoberfläche beitragen können.

Der Aufbau der Wischleisten 12 bzw. 112 bzw. 212 bzw. 312 gemäß den Figuren 2 bis 5 ist üblicherweise so getroffen, daß sich eine Längs-Symetrieebene 402 ergibt deren Verlauf - der Übersichtlichkeit wegen - aber lediglich in den Figuren 3 und 7 eingezeichnet ist. Die Symetrieebene 402 erstreckt sich durch die Kopfleiste 126, den Kippsteg 36 und durch die Wischlippe 14, wobei sie bezüglich der Scheibenoberfläche 22 stehend angeordnet ist.

Eine weitere, mögliche Ausgestaltung des Wischblatts ist in Figur 2 angegeben. Dort ist ersichtlich, daß an der von der Wischlippe 14 abgewandten Oberseite 25 der Kopfleiste 26 diese in eine sogenannte Windabweisleiste übergeht, welche in Figur 2 mit der Bezugszahl 404 versehen worden ist. Diese strichpunktiert dargestellte Windabweisleiste 404 erstreckt sich überlicherweise über die gesamte Länge des Wischblatts beziehungsweise der Wischleiste.

Um die Wischblätter gemäß den Figuren 2 bis 5 aus den eingangs erwähnten Gründen unbeschädigt zum Endverbraucher gelangen zu lassen, können deren besonders sensiblen Bereiche an der Wischlippe 14 ausgebildete Wischkanten 15 durch Verpackungseinheiten geschützt werden, deren besondere Ausgestaltungen anhand der Figuren 6 bis 11 im folgenden näher erläutert werden sollen. Allen diesen Verpackungseinheiten ist gemeinsam, daß sie als der Länge der Wischleiste angepaßtes gestrecktes, im Querschnitt rinnenförmiges, in Längsrichtung steifes Bauteil ausgebildet sind, wobei diese Bauteile an ihren beiden Enden offen sind, d. h. daß sie keine Abschlußwand haben. Dadurch ist zur Herstellung dieser Bauteile eine kostengünstige Endlosextrusion möglich.

Eine erste Ausführungsform einer erfindungsgemäßen Verpackungseinheit 50 soll anhand der Figuren 6 und 7 sowie eines Wischblatts mit einem Querschnitt gemäß Figur 2 erläutert werden. Aus Figur 7 in Verbindung mit Fig. 2 ist ersichtlich, daß das Tragelement 16 des Wischblatts 10 an zumindest zwei bezüglich der Symetrieebene 402 einander gegenüberliegend angeordneten seitlichen Randabschnitten 58 über die Wischleiste 12 hinausragt. Das Bauteil 51 der Verpackungseinheit 50 gemäß Figur 7 ist an seinen Rinnen-Längskanten 52 mit im Querschnitt U-förmig ausgebildeten Ansätzen 54 versehen. Die jeweiligen U-Schenkel 56 der Ansätze 54 erstrecken sich zur Symmetrieebene 402 und umgreifen die Randabschnitte 58 des Tragelements 16. Das Bauteil 51 selbst umgibt mit seinen beiden Rinnenwangen 60 und der Rinnenbasis 62 die Wischlippe 14 des Wischblatts 10 über dessen gesamte Länge mit Abstand, wenn das Wischblatt 10 von einem offenen Ende des rinnenförmigen Bauteils 51 her in der Verpackungseinheit 50 untergebracht ist. Die erwünschte Streckung des Wischblatts ist aus dem vergrößerten Längs-Teilschnitt (Fig. 6) ersichtlich. Es ist erkennbar, daß jeder Randabschnitt 58 des Tragelements 16 in Längsrichtung gesehen drei Auflagestellen 64 an den U-Schenkeln 56 der U-Ansätze 54 hat, so daß sich eine im wesentlichen gestreckte, zuverlässig fixierte Position des Wischblatts bzw. der Wischleiste in der Verpackungseinheit 50 ergibt. Die Randabschnitte 58 des Tragelements 16 bilden somit Stützen des Wischblatts 10, welche mit den die Auflagestellen 64 bildenden Stützen der Verpackungseinheit zusammenwirken, die durch die einander zugewandten Seiten der beiden U-Schenkel 56 an jeder der beiden Rinnen-Längskanten 52 gebildet sind. Da der Abstand 66 zwischen den beiden einander zugewandten Innenseiten der zueinander gehörenden U-Schenkeln 56 aus nachliegenden Gründen etwas größer sein muß als die Dicke des Tragelements, kann das verpackte Wischblatt noch geringfügig gekrümmt sein. Diese Restkrümmung ist jedoch im Hinblick auf die gewünschte Wischblattstreckung belanglos.

Eine andere Ausgestaltung der erfindungsgemäßen Verpackungseinheit 68 wird im folgenden anhand der Figuren 8 und 9 sowie einem Wischblatt mit einem Querschnitt gemäß Fig. 4 näher erläutert. Auch bei dieser Ausführungsform hat die verpackungseinheit 68 ein langgestrecktes, im Querschnitt rinnenartiges Bauteil 70, welches an seinen beiden Rinnen-Längskanten 71 jeweils mit einem krallenartigen Ansatz 72 versehen ist. Die beiden krallenartigen Ansätze 72 erstrecken sich von den Rinnen-Längskanten 71 aus aufeinander zu bzw. zur Symmetrieebene 402. Diese Krallenansätze 72 tauchen dabei in die Nuten 400 ein, welche gemäß den Figuren 2 bis 5 in der Kopfleiste 26 bzw. 126 bzw. 226 bzw. 326 des Wischblatts 10 angeordnet sind. Wenn das Wischblatt sich gemäß Figur 9 in der Verpackungseinheit 68 befinde, stützt sich das Wischblatt bzw. die Wischleiste mit den einander zugewandten Seitenwänden 401 der beiden Nuten 400 an den ihnen zugeordneten Seitenflächen 63 der Krallenansätze 72 der Verpackungseinheit 68 ab so daß sich eine stabile Dreipunktauflage ergibt, deren Auflagestellen in Figur 8 mit der Bezugszahl 74 versehen worden ist. Während des Einschiebens des Wischblatts in die Verpackungseinheit 68 ergibt sich somit zwangsläufig die vorteilhafte, erwünschte Streckung des Wischblatts 10.

In Abwandlung des Ausführungsbeispiels gemäß den Figuren 8 und 9 kann eine weitere Ausführungsform der Verpackungseinheit 76 mit an den Rinnen-Längskanten 71 des im Querschnitt rinnenförmigen Bauteils 76 angeordneten krallenartigen Ansätzen 80 in die Längsnuten 38 der Wischleiste 12 greifen, welche zur Bildung des Kippstegs 36 führen (Fig. 4 und 11). Wenn die Verpackungseinheit 76 nun entsprechend Figur 11 auf die Wischleiste 12 aufgebracht worden ist, ergibt sich die aus dem Längsschnitt gemäß Figur 10 ersichtliche Situation. Das Wischblatt stützt sich an den voneinander abgewandten Flächen 81 der Krallenansätze 80 mit den Seitenwänden 39 der Längsnuten 38 an drei Auflagestellen 82 ab so daß sich die erwünschte Streckung des Wischblatts ergibt.

Bei allen Ausführungsformen wird der Schutz der Wischkanten 15 der Wischlippe 14 jeweils durch den Rinnen-Basisbereich der Verpackungseinheiten 50 bzw. 68 bzw. 76 gewährleistet, welche die Wischlippe 14 mit Abstand umgibt. Die Streckung des Wischblatts wird bei allen Ausführungsformen durch eine entsprechend stabile, steife Ausführung der jeweiligen, vorzugsweise aus einem Kunststoff gefertigten Verpackungseinheit erreicht.

Aus Figur 12 ist ersichtlich, daß eine bevorzugte Ausführungsform der erfindungsgemäßen Verpackungseinheit als sogenannte Doppeleinheit 86 ausgebildet werden kann. Dabei werden gemäß einer ersten Ausführungsform zwei Einzeleinheiten 68 entlang ihrer Rinnenbasen 62 miteinander verbunden. Gemäß einer in Figur 13 dargestellten Variante weisen die beiden zu einer Doppel-Verpackungseinheit 186 gehörenden Einzeleinheiten 68 eine gemeinsame Rinnenwange 60 auf. Bei beiden Ausführungsformen einer Doppeleinheit gemäß den Figuren 12 und 13 weisen die Abstützungen bezüglich einer durch die Verpackungseinheit gelegten Längsebene 88 in entgegengesetzte Richtungen. Der daraus resultierende Vorteil ergibt sich bei Betrachtung der Figuren 14 und 15. Aus Figur 14 ist ersichtlich, daß die Doppel-verpackungseinheit 86 gestreckt ist, während die beiden in dieser unterzubringenden Wischblätter 10 die anhand von Figur 1 schon erläuterte Krümmung aufweisen. Es ist klar, daß nach dem Einbringen der beiden Wischblätter 10 in die Doppel-Verpackungseinheit 86 - das heißt wenn die beiden Wischblätter 10 gestreckt sind - aufgrund der nun von den Wischblättern ausgehenden Spannung diese auf die Verpackungseinheit 86 eine Belastung ausüben, die bei einzelnen Verpackungseinheiten durch entsprechende Dimensionierung aufgefangen werden muß. Da jedoch - wie aus Figur 15 ersichtlich - die von den beiden Wischblättern 10 ausgeübten Kräfte (Pfeile 90) - einander entgegengerichtet sind, wird diese Belastung aufgehoben. Aus Figur 13 ist noch erkennbar, daß jede der erfindungsgemäßen Verpackungseinheiten an ihren von der Rinnenbasis 62 abgewandten Seite mit einer entsprechenden Haube 92 versehen werden kann, welche eine am Wischblatt angeordnete, sich in Längsrichtung des Wischblatts erstreckende Windabweisleiste 404 (Fig. 2) schützend übergreift.

Unabhängig von der hier verwendeten Bezeichnung "Verpackungseinheit" umfaßt die Erfindung selbstverständlich auch Abwandlungen der erfindungsgemäßen Elemente.

Beispielsweise ist es denkbar, diese Elemente lediglich als Streckhilfe für das Wischblatt zu benutzen und diese Kombination dann in einem zusätzlichen Behältnis unterzubringen.

Allen Ausführungen der erfindungsgemäßen Verpackungseinheit ist gemeinsam, daß das Wischblatt in Längsrichtung gesehen beidseitig einer der Bandflächen des Tragelements schneidenden Symmetrieebene mit quer zu diesen ausgerichteten Stützen versehen ist, daß die Verpackungseinheit als gestrecktes, der Länge der Wischleiste angepaßtes, im Querschnitt rinnenförmiges in Längsrichtung steifes Bauteil, ausgebildet ist, welches mit seiner Rinnenbasis die Symmetrieebene der Wischleiste mit Abstand von der Wischlippe überquert und im Bereich der Rinnen-Längskanten mit den Stützen des Wischblatts zugeordneten Abstützungen versehen ist, die das Wischblatt gegen die Federkraft des Tragelements in eine zumindest im wesentlichen gestreckte Position zwingen.

## Patentansprüche

1. Verpackungseinheit für ein in dieser zumindest bereichsweise untergebrachtes Wischblatt (10) für Scheiben von Kraftfahrzeugen, welches eine langgestreckte, gummielastische, an einem bandartig langgestreckten federelastischen Tragelement (16) längsachsenparallel gehaltene Wischleiste (12) mit einer an der Scheibe (20) anlegbaren Wischlippe (14) hat, wobei das unbelastet über seine Bandflächen (17) gekrümmte Tragelement (16) bezüglich der entsprechend gekrümmten Wischlippe (14) außenliegend angeordnet ist, das Wischblatt (10) in Längsrichtung gesehen beidseitig mit einer die Bandflächen schneidenden Symetrieebene (402) mit quer zu dieser ausgerichteten Stützen versehen ist, und die Verpackungseinheit (50, 68, 76, 86, 186) als gestrecktes, der Länge der Wischleiste (12) angepasstes, im Querschnitt rinnenartiges in Längsrichtung steifes Bauteil (51, 70, 78) ausgebildet ist, welches mit seiner Rinnen-Basis (62) die Ebene (402) der Wischleiste mit Abstand von der Wischlippe (14) diese über deren gesamte Länge quert und im Bereich der Rinnen-Längskanten (52, 71) mit den Stützen des Wischblatts zugeordneten Abstützungen versehen ist, **dadurch gekennzeichnet, dass** die Abstützungen das Wischblatt in der Form einer Dreipunktauflage gegen die Federkraft des Tragelements (16) in eine zumindest im wesentlichen gestreckte Position zwingen.

2. Verpackungseinheit nach Anspruch 1, **dadurch gekennzeichnet, daß** das Tragelement (16) zumindest abschnittsweise mit zumindest zwei bezüglich der Ebene (402) einander gegenüberliegend angeordneten, seitlichen Randabschnitten (58) über die Wischleiste hinausragt, an denen die Stützen des Wischblatts ausgebildet sind und daß an jeder der Rinnen-Längskanten der Verpackungseinheit den Stützen des Wischblatts zugeordnete, im Querschnitt U-förmig ausgebildete Ansätze (54) angeordnet sind, deren jeweiligen U-Schenkel (56) die Randabschnitte (58) des Tragelements (16) umgreifend sich zur Ebene erstrecken.

3. Verpackungseinheit nach Anspruch 1, **dadurch gekennzeichnet, daß** die Wischleiste (12) des Wischblatts (10) an ihren beiden einander gegenüberliegenden Längsseiten (28) mit jeweils einer zu ihrer Längsseite randoffenen Längsnut versehen ist, an deren Seitenflächen (39) die wischblattseitigen Stützen ausgebildet sind und daß an jeder der Rinnen-Längskanten (52 bzw. 71) jeweils ein krallenartiger Ansatz (72 bzw. 80) ausgebildet ist, der sich zur Ebene (402) in die eine ihm zugeordnete Längsnut (38 bzw. 400) erstreckt.

4. Verpackungseinheit nach Anspruch 3, **dadurch gekennzeichnet, daß** die Wischleiste eine mit dem Tragelement verbundene Kopfleiste (26) hat, die über einen zwischen den beiden Längsnuten (38) verbleibenden Steg (36) mit der leistenartigen Wischlippe (14) verbunden ist wobei an den Seitenwänden (39) der beiden Längsnuten (38) die Stützen des Wischblatts (10) ausgebildet sind.

5. Verpackungseinheit nach Anspruch 4, **dadurch gekennzeichnet, daß** die wischblattseitigen Stützen an in der Kopfleiste (26) angeordneten Längsnuten (400) ausgebildet sind.

6. Verpackungseinheit nach einem der Ansprüche 1 bis 5, **dadurch gekennzeichnet, daß** die Verpackungseinheit (86 bzw. 186) zwei miteinander verbundene, rinnenartige Bauteile (68) aufweist, deren jeweilige Stützen bezüglich einer durch die Verpackungseinheit gelegten Ebene (88) in entgegen gesetzte Richtungen weisen.

7. Verpackungseinheit nach Anspruch 6, **dadurch gekennzeichnet, daß** die beiden Bauteile (68) entlang ihrer - Rinnen-Basen (62) miteinander verbunden sind.

8. Verpackungseinheit nach Anspruch 6, **dadurch gekennzeichnet, daß** die beiden Bauteile (68) zumindest über einen Teilabschnitt eine gemeinsame Rinnenwange (60) aufweisen.

9. Verpackungseinheit nach einem der Ansprüche 1 bis 8, **dadurch gekennzeichnet, daß** das rinnenartige Bauteil (51 bzw. 70 bzw. 78) an seinen beiden Enden (11) offen ist.

10. Verpackungseinheit nach einem der Ansprüche 1 bis 9, wobei das Wischblatt (10) an der von der Wischlippe (14) abgewandten Bandfläche (17) des Tragelements (16 bzw. 216) mit einer sich in Längsrichtung des Wischblatts erstreckenden Windabweisleiste (404) versehen ist, **dadurch gekennzeichnet, daß** die Verpackungseinheit (186) an ihrer von der Rinnen-Basis abgewandten Seite eine die Windabweisleiste (404) übergreifende Haube (92) aufweist.

11. Verpackungseinheit nach einem der Ansprüche 1 bis 10, **dadurch gekennzeichnet, daß** die Verpackungseinheit (50 bzw. 68 bzw. 76 bzw. 86 bzw. 186) aus einem Kunststoff gefertigt ist.

12. Verpackungseinheit für ein in dieser zumindest bereichsweise untergebrachtes Wischblatt (10) für Scheiben von Kraftfahrzeugen, welches eine langgestreckte, gummielastische, an einem bandartig langgestreckten federelastischen Tragelement (16) längsachsenparallel gehaltene Wischleiste (12) mit einer an der Scheibe (20) anlegbaren Wischlippe (14) hat, wobei das unbelastet über seine Bandflächen (17) gekrümmte Tragelement (16) bezüglich der entsprechend gekrümmten Wischlippe (14) außenliegend angeordnet ist, das Wischblatt (10) in Längsrichtung gesehen beidseitig mit einer die Bandflächen schneidenden Symetriebene (402) mit quer zu dieser ausgerichteten Stützen versehen ist, an denen eine als steifes Bauteil (51, 70, 78) ausgebildete Streckhilfe angreift, welche das Wischblatt in der Form einer Dreipunktauflage gegen die Federkraft des Tragelements (16) in eine zumindest im wesentlichen gestreckte Position zwingt und diese Kombination dann in einem zusätzlichen Behältnis untergebracht ist.

## Revendications

1. Emballage pour recevoir au moins partiellement un balai d'essuie-glace (10) de véhicule, comportant une lame d'essuyage (12) allongée, élastique comme du caoutchouc, tenue de manière parallèle à l'axe longitudinal à un élément de support (16) en forme de bande, allongée, ayant l'élasticité d'un ressort, et ayant une lèvre d'essuyage (14) destinée à s'appliquer contre une vitre (20).
l'élément de support (16) étant situé à l'extérieur par rapport à la lèvre d'essuyage (14), cintré de manière correspondante, lorsque cet élément est cintré sans être sollicité par ses faces (17),
le balai d'essuie-glace (10) comporte, dans la direction longitudinale, de part et d'autre d'un plan symétrique (402) coupant la surface de la bande, des supports alignés sur celle-ci, et
l'emballage (50, 68, 76, 86, 186) est réalisé sous la forme d'une pièce (51, 70, 78), allongée, adaptée à la longueur de la lame d'essuyage (12), rigide dans la direction longitudinale et ayant une section avec des gorges, cette pièce coupant par la base de sa gorge (62), le plan (402) de la lame d'essuyage à une distance de la lèvre d'essuyage (14), sur toute la longueur de celle-ci et au niveau des arêtes longitudinales de gorge (52, 71) il y a des appuis associés aux appuis du balai d'essuie-glace,
**caractérisé en ce que**
dans au moins une position principalement allongée les appuis du balai d'essuie-glace poussent sous la forme d'un appui en trois points contre la force de ressort développée par l'élément de support (16).

2. Emballage pour recevoir au moins partiellement un balai d'essuie-glace selon la revendication 1,
**caractérisé en ce qu'**
au moins par segment l'élément de support (16) dépasse de la lame par au moins deux segments de bord (58) latéraux, opposés l'un à l'autre par rapport au plan (402), et les appuis du balai d'essuie-glace sont réalisés sur ceux-ci, et
chacune des arêtes longitudinales de gorge de l'emballage comporte des prolongements (54) à section en forme de U associés aux appuis du balai d'essuie-glace, et dont les branches en U (56) respectives s'étendent dans un plan en entourant les segments de gorge (58) de l'élément de support (16).

3. Emballage pour recevoir au moins partiellement un balai d'essuie-glace selon la revendication 1,
**caractérisé en ce que**
la lame d'essuyage (12) du balai d'essuie-glace (10) comporte à chaque fois sur ses grands côtés (28) opposés l'un à l'autre, une rainure longitudinale à bord ouvert vers les grands côtés, et dont les surfaces latérales (39) sont munies des appuis du côté du balai d'essuie-glace, et
au niveau de chacune des arêtes longitudinales de gorge (52, 71) on a un prolongement (72, 80) en forme de griffe qui s'étend par rapport au plan (402) dans la rainure longitudinale (38, 400) qui lui est associée.

4. Emballage pour recevoir au moins partiellement un balai d'essuie-glace selon la revendication 3,
**caractérisé en ce que**
la lame d'essuyage comporte un longeron de tête (26) relié à l'élément de support, lui-même relié à la lèvre d'essuyage (14) en forme de barrette, par l'entretoise (36) qui subsiste entre les deux rainures longitudinales (38), et les appuis du balai d'essuie-glace (10) sont réalisés sur les parois latérales (39) des deux rainures longitudinales (38).

5. Emballage pour recevoir au moins partiellement un balai d'essuie-glace selon la revendication 4,
**caractérisé en ce que**
les appuis côté balai d'essuie-glace sont réalisés dans les rainures longitudinales (400) de la barrette de tête (26).

6. Emballage pour recevoir au moins partiellement un balai d'essuie-glace selon l'une des revendications 1 à 5,
**caractérisé en ce que**
l'emballage (86, 186) comporte deux pièces (68) en forme de rainures reliées l'une à l'autre et dont les appuis respectifs sont dirigés dans des directions opposées par rapport à un plan (88) passant par l'emballage.

7. Emballage pour recevoir au moins partiellement un balai d'essuie-glace selon la revendication 6,
**caractérisé en ce que**
les deux composants (68) sont reliés l'un à l'autre le long des bases de rainures (62).

8. Emballage pour recevoir au moins partiellement un balai d'essuie-glace selon la revendication 6,
**caractérisé en ce que**
les deux composants (68) ont une joue de rainure (60) commune sur au moins un segment partiel.

9. Emballage pour recevoir au moins partiellement un balai d'essuie-glace selon l'une des revendications 1 à 8,
**caractérisé en ce que**
le composant (51, 70, 78) en forme de rainure est ouvert au niveau de ses deux extrémités (11).

10. Emballage pour recevoir au moins partiellement un balai d'essuie-glace selon l'une des revendications 1 à 9, selon lequel le balai d'essuie-glace (10) comporte au niveau de la surface de bande (17) à l'opposé de la lèvre d'essuyage (14) de l'élément de support (16, 216), un longeron déflecteur (404) s'étendant dans la direction longitudinale du balai d'essuie-glace,
**caractérisé en ce que**
l'emballage (186) comporte, au niveau de son côté opposé à la base des rainures, une coiffe (92) couvrant le longeron déflecteur (404).

11. Emballage pour recevoir au moins partiellement un balai d'essuie-glace selon l'une des revendications 1 à 10,
**caractérisé en ce que**
l'emballage (50, 68, 76, 86, 186) est fabriqué en matière plastique.

12. Emballage pour recevoir au moins partiellement un balai d'essuie-glace (10) de véhicule, comportant une lame d'essuyage (12) allongée, élastique comme du caoutchouc, tenue de manière parallèle à l'axe longitudinal à un élément de support (16) en forme de bande, allongée, ayant l'élasticité d'un ressort, et ayant une lèvre d'essuyage (14) destinée à s'appliquer contre une vitre (20),
l'élément de support (16) étant situé à l'extérieur par rapport à la lèvre d'essuyage (14), cintré de manière correspondante, lorsque cet élément est cintré sans être sollicité par ses faces (17),
le balai d'essuie-glace (10) comporte, dans la direction longitudinale, de part et d'autre d'un plan symétrique (402) coupant la surface de la bande, des supports alignés sur celle-ci, supports sur lesquels vient en prise un support d'extension réalisé en tant que pièce rigide (51, 70, 78), dans au moins une position principalement allongée, les appuis du balai d'essuie-glace poussent sous la forme d'un appui en trois points contre la force de ressort développée par l'élément de support (16), et cette combinaison est à son tour mise dans un autre boîtier.

## Claims

1. Packaging unit for a vehicle windscreen wiper blade (10) which is at least partly located therein and has an elongate, rubber-elastic wiper strip (12), which is held parallel to the longitudinal axis on a spring-elastic supporting element (16), which is elongate in the manner of a band, with a wiper lip (14) which can be placed against the windscreen (20), the supporting element (16), which is curved over its band surfaces (17) in the unloaded state, being arranged on the outside with respect to the correspondingly curved wiper lip (14), the wiper blade (10), as seen in the longitudinal direction, being provided on both sides with a plane of symmetry (402) which intersects the band surfaces and has supports oriented transversely with respect to it, and the packaging unit (50, 68, 76, 86, 186) being designed as a stretched component (51, 70, 78) which is matched to the length of the wiper strip (12), is channel-like in cross section, is stiff in the longitudinal direction and, by means of its channel base (62), crosses the plane (402) of the wiper strip at a distance from the wiper lip (14) over the entire length of the latter and is provided in the region of the channel longitudinal edges (52, 71) with supporting means assigned to the supports of the wiper blade, **characterized in that** the supporting means force the wiper blade in the form of a three-point support counter to the spring force of the supporting element (16) into an at least substantially stretched position.

2. Packaging unit according to Claim 1, **characterized in that** the supporting element (16) protrudes over the wiper strip at least in some sections with at least two lateral edge sections (58) which are arranged opposite one another with respect to the plane (402) and on which the supports of the wiper blade are formed, and **in that** lugs (54) are arranged on each of the channel longitudinal edges of the packaging unit, which lugs are assigned to the supports of the wiper blade, are of U-shaped design in cross section and the respective U-limbs (56) of which, engaging around the edge sections (58) of the supporting element (16), extend towards the plane.

3. Packaging unit according to Claim 1, **characterized in that** the wiper strip (12) of the wiper blade (10) is provided on its two mutually opposite longitudinal sides (28) with a respective longitudinal groove which is open at the edge towards its longitudinal side and on the side surfaces (39) of which the wiper-blade-side supports are formed, and **in that** a respective claw-like lug (72 and 80) is formed on each of the channel longitudinal edges (52 and 71), the said lug extending towards the plane (402) into the one longitudinal groove (38 or 400) assigned to it.

4. Packaging unit according to Claim 3, **characterized in that** the wiper strip has a top strip (26) which is connected to the supporting element and is connected to the strip-like wiper lip (14) via a web (36) remaining between the two longitudinal grooves (38), the supports of the wiper blade (10) being formed on the side walls (39) of the two longitudinal grooves (38).

5. Packaging unit according to Claim 4, **characterized in that** the wiper-blade-side supports are formed on longitudinal grooves (400) arranged in the top strip (26).

6. Packaging unit according to one of Claims 1 to 5, **characterized in that** the packaging unit (86 or 186) has two channel-like components (68) which are connected to each other and the respective supports of which point in opposed directions with regard to a plane (88) placed through the packaging unit.

7. Packaging unit according to Claim 6, **characterized in that** the two components (68) are connected to each other along their channel bases (62).

8. Packaging unit according to Claim 6, **characterized in that** the two components (68) have a common channel cheek (60) at least over a partial section.

9. Packaging unit according to one of Claims 1 to 8, **characterized in that** the channel-like component (51 or 70 or 78) is open at both of its ends (11).

10. Packaging unit according to one of Claims 1 to 9, wherein the wiper blade (10) is provided on the band surface (17) of the supporting element (16 or 216), which band surface faces away from the wiper lip (14), with a wind-deflecting strip (404) extending in the longitudinal direction of the wiper blade, **characterized in that** the packaging unit (186) has, on its side facing away from the channel base, a hood (92) engaging over the wind-deflecting strip (404).

11. Packaging unit according to one of Claims 1 to 10, **characterized in that** the packaging unit (50 or 68 or 76 or 86 or 186) is manufactured from a plastic.

12. Packaging unit for a vehicle windscreen wiper blade (10) which is at least partly located therein and has an elongate, rubber-elastic wiper strip (12), which is held parallel to the longitudinal axis on a spring-elastic supporting element (16), which is elongate in the manner of a band, with a wiper lip (14) which can be placed against the windscreen (20), the supporting element (16), which is curved over its band surfaces (17) in the unloaded state, being arranged on the outside with respect to the correspondingly curved wiper lip (14), the wiper blade (10), as seen in the longitudinal direction, being provided on both sides with a plane of symmetry (402) which intersects the band surfaces and has supports oriented transversely with respect to it, and on which a stretching aid designed as a stiff component (51, 70, 78) acts, which stretching aid forces the wiper blade in the form of a three-point support counter to the spring force of the supporting element (16) into an at least substantially stretched position and this combination is then accommodated in an additional container.
